(19) Europäisches Patentamt / European Patent Office / Office européen des brevets

(11) **EP 3 474 487 A1**

(12) **EUROPEAN PATENT APPLICATION**

(43) Date of publication:
**24.04.2019 Bulletin 2019/17**

(51) Int Cl.:
*H04L 9/32* [(2006.01)]

(21) Application number: **17306458.5**

(22) Date of filing: **23.10.2017**

(84) Designated Contracting States:
**AL AT BE BG CH CY CZ DE DK EE ES FI FR GB GR HR HU IE IS IT LI LT LU LV MC MK MT NL NO PL PT RO RS SE SI SK SM TR**
Designated Extension States:
**BA ME**
Designated Validation States:
**MA MD**

(71) Applicant: **GEMALTO SA**
**92190 Meudon (FR)**

(72) Inventors:
- **DUVAL, Benjamin**
  **13881 GEMENOS Cedex (FR)**
- **BERZATI, Alexandre**
  **13881 GEMENOS Cedex (FR)**
- **FOURQUIN, Olivier**
  **13881 GEMENOS Cedex (FR)**

(54) **METHOD OF IMPLEMENTING A PHYSICAL UNCLONABLE FUNCTION**

(57)   Method generating and selecting primitives for implementing a Physical Unclonable Function providing a response representative of a device comprising a plurality of primitives coupled in pairs (P1,...,P6). The method comprises the following steps:
- selecting a subset (20) of the pairs,
- assessing difference between electrical characteristics values provided by primitives belonging to each pair of said subset (20), and
- qualifying all pairs of primitives for which the assessed difference is higher than a reference threshold.

FIG. 4

Printed by Jouve, 75001 PARIS (FR)

**Description**

**(Field of the invention)**

The present invention relates to methods of implementing Physical Unclonable Functions (PUF). It relates particularly to methods of implementing PUF for a device comprising a plurality of electronical primitives.

**(Background of the invention)**

A Physical Unclonable Function (PUF) is a function that is embodied in a physical structure and is easy to evaluate but extremely difficult to predict. An individual PUF device must be easy to make but practically impossible to duplicate, even given the exact manufacturing process that produced it. The intrinsic PUF microstructures characteristics depends on process variations during manufacture that are uncontrolled and cannot be monitored. Hence, when a physical stimulus is applied to the structure, it reacts in an unpredictable way due to the complex interaction of the stimulus with the physical microstructure of the component. The applied stimulus is called the challenge, and the reaction of the PUF is called the response. A specific challenge and its corresponding response together form a challenge-response pair which is specific to a given device. Thanks to PUF principle, the identity of the device is established by the properties of the microstructure itself.

Such a challenge-response pair must be steady. A PUF of a chip can be generated thanks to its electronic components. Given the natural variations in the behavior of the electronic components (especially due to environmental conditions like temperature or power supply), so far it is necessary to perform treatments to filter out the raw response in order to obtain a refined response which is steady. Such filtering process is known as post-processing operations during the generation of a PUF response. It is to be noted that post processing operations is generally a part of PUF running.

Unfortunately, such post processing operations are time-consuming since they are run each time a PUF response is generated.

There is a need for enhancing the generation of stable and a reliable response of a PUF of an electronic device.

**(Summary of the Invention)**

The invention aims at solving the above mentioned technical problem.

An object of the present invention is a method for generating and selecting primitives for implementing a Physical Unclonable Function (PUF) providing a response representative of a device. The device comprises a plurality of primitives coupled in pairs. The method comprises the following steps:

- selecting a subset of the pairs,
- assessing difference between electrical characteristics values provided by primitives belonging to each pair of said subset, and
- qualifying all pairs of primitives for which the assessed difference is higher than a reference threshold.

Advantageously, the assessing step may be performed by injecting an electrical mismatch between primitives of each pair.

Advantageously, the method may comprise a further step of permanently storing a vector identifying the qualified pairs.

Advantageously, the reference threshold may be adjusted in function of a targeted ratio of qualified pairs to all pairs of the subset.

Another object of the invention is a method for executing a Physical Unclonable Function where the method comprises the following steps:

- retrieving the pairs qualified according to the method described above,
- generating a Physical Unclonable Function response only from primitives belonging to all qualified pairs.

Another object of the invention is a device comprising a plurality of primitives coupled in pairs (PI, ..., P6). A subset of the pairs is selected and the device comprises a selector configured to assess difference between electrical characteristics values provided by primitives belonging to each pair of the subset. The selector is configured to qualify all pairs of primitives for which the assessed difference is higher than a reference threshold, said qualified pairs corresponding to primitives selected for implementing a Physical Unclonable Function providing a response representative of the device.

Advantageously, the selector may be configured to inject an electrical mismatch between primitives of each pair of the subset when assessing difference between electrical characteristics values.

Advantageously, the selector may be configured to permanently store a vector identifying the qualified pairs.

Advantageously, the device may comprise a generator adapted to run the Physical Unclonable Function, and the generator may be configured to generate the response from only the qualified pairs.

Advantageously, the device may be a chip or a system-on-a-chip.

Advantageously, the device may be a printed circuit board and primitives may be electronic components.

**(Brief description of the drawings)**

Other characteristics and advantages of the present invention will emerge more clearly from a reading of the following description of a number of preferred embodiments of the invention with reference to the corresponding accompanying drawings in which:

- Figure 1 depicts a schematic and block diagram representation illustrating an example circuit for implementing a device realized with current mirror according to an embodiment of the invention;
- Figure 2 depicts a schematic and block diagram representation illustrating an example unit cell of PUF for generating a bit according to an embodiment of the invention;
- Figure 3 shows a flow diagram illustrating example operations of a device for selecting robust bit during pre-processing operations according to an example of the invention; and
- Figure 4 depicts schematically an example of a device configured to select electronic primitives for a PUF and to generate a PUF according to an embodiment of the invention.

**(Detailed description of the preferred embodiments)**

The invention may apply to any types of electronic devices comprising a plurality of active electronic primitives such as transistors. In this document, a primitive is an active electronic unit or electronic component. Preferably, the primitive is a basic electronic unit.

For example primitives may be vias, resistances, ring oscillators or SRAM cells.

Difference between two identical primitives is due to stochastic process mismatches. Distribution of values of difference between primitives follows a normal law. (Known as Gaussian distribution.)

The invention aims at qualifying primitive pairs which provide outputs sufficiently far from an unstable state. During a preprocessing phase, pairs for which primitive difference is below a target threshold are rejected and identified as not robust. Reciprocally, pairs for which primitive difference is higher than a target threshold are identified as robust and qualified for constituting the PUF response.

According to the invention, each qualified pair of primitives corresponds to one bit of the PUF response.

In the following examples, the electronic device is a chip but it could be any other kind of integrated circuit, system-on-a-chip (SOC) or printed circuit board (PCB).

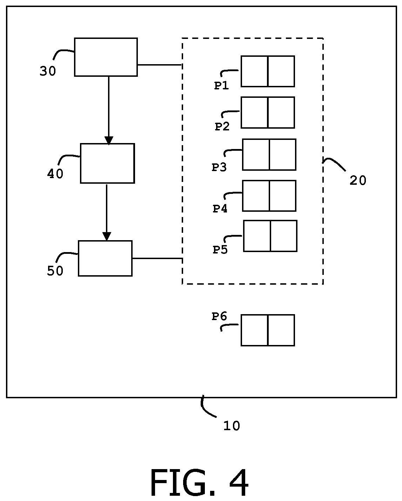

**Figure 4** shows schematically an example of an electronic device configured to select electronic primitives for a PUF and to generate a PUF according to an embodiment of the invention.

The device 10 may be chip comprising a large number of electronic primitives which are coupled in pairs P1, ..., P6. A subset 20 of these pairs has been defined.

The device 10 comprises a selector 30 which is configured to assess difference between electrical characteristics values provided by primitives belonging to each pair of the subset 20.

In a preferred embodiment, the electrical characteristics is the current. Alternatively, it may be the voltage for example.

In the embodiment of Figure 4, the selector 30 is able to reduce (and conversely may be adapted to increase) the current issue from one of the primitives and compare the current outputted by the primitives of a pair. The selector 30 is configured to qualify all pairs for which the assessed difference (between current measured as output of each primitive) is higher than a reference threshold which is defined by current reduction applied. The qualified pairs contain the primitives which are selected for implementing the physical unclonable function (PUF) that provides a response representative of the device 10.

The value of the reference threshold and /or the number of pairs to be used may be adjusted according to a targeted number of qualified pairs.

Preferably, the selector 30 is designed to inject an electrical mismatch between primitives of the pairs when assessing difference between electric current values.

In another embodiment, the selector 30 may be located outside the device 10 itself.

In a preferred embodiment, the selector 30 permanently stores a vector 40 in the non-volatile memory of the device 10. The vector 40 identifies the qualified pairs. For instance, the vector 40 may be a mask comprising a value for each of the measured pairs. In this case the value may be either "selected" or "rejected" and coded on a single bit. Thus when the PUF is run, the mask is applied to the raw PUF response to generate a final PUF response which take into account the result of the selected pairs only.

In another embodiment, the vector 40 may be stored outside the device 10 itself. For instance, the vector 40 may be stored in a server machine which is intended to retrieve the raw response of the PUF. In such a case the server machine applies the vector 40 to the raw response in order to get the final PUF response.

The vector is intended to remain valid during the full device lifespan.

It is to be noted that even if the content of the vector 40 is retrieved by a malevolent person (through an attack), the PUF response is not compromised.

In a preferred embodiment, the device 10 comprises a generator 50 adapted to run the physical unclonable function and to generate the PUF response from only the qualified pairs.

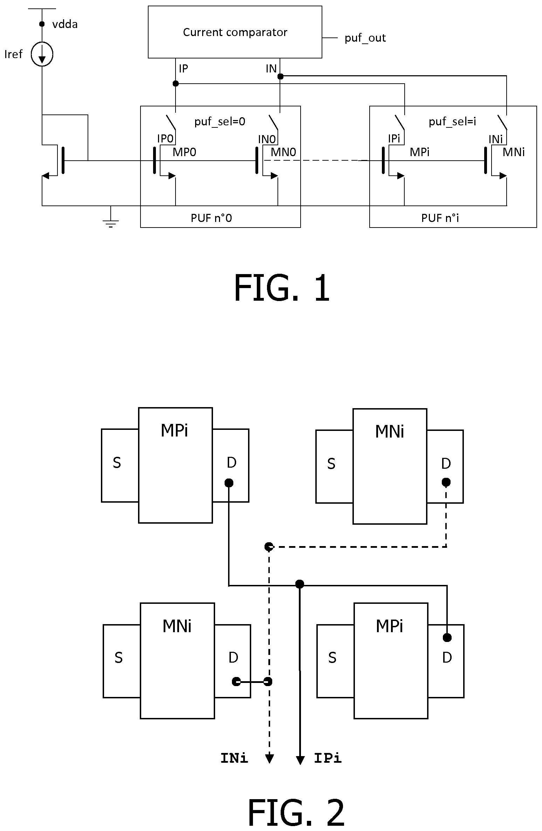

**Figure 1** shows a schematic and block diagram representation illustrating an example circuit for implementing primitives realized with current mirror according to an embodiment of the invention.

In this example, the PUF design is based on comparison of identical primitives. More precisely, it is based on current mirroring comparison.

The following legend applies:

vdda = power supply.
Iref = current reference.
IP and IN = Positive and Negative Input of current comparator.
Mpi and Mni = PUF cell primitives of PUF n°i.
IPi and INi=current issue from primitive Mpi and Mni.
puf_sel= vector allowing to select a PUF address.
Puf n°i = unit cell of PUF that may be selected by addressing address i.
NB: When puf_sel=i, Puf_n°i is addressed, current issue from primitives Mpi and Mni are compared (respectively IPi and INi). In this case IP=IPi and IN=Ini.

**Figure 2** shows a schematic and block diagram representation illustrating an example unit cell of PUF for generating a bit according to an embodiment of the invention.

In a preferred embodiment, the architecture is designed so as to reduce all deterministic variations. For example, the layout may be designed in common centroid manner as shown at Figure 2.

The outputs INi and IPi could be sent to the comparator if addressing.

It is to be noted that depending on application needs, PUF bits can be read sequentially for power saving or in parallel for speed optimization.

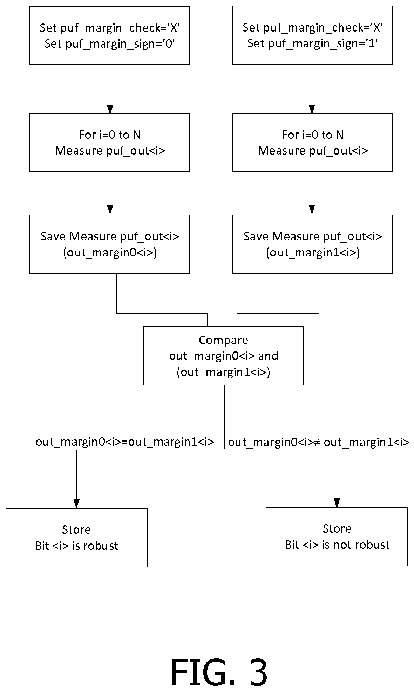

**Figure 3** shows a flow diagram illustrating example operations of a device for selecting robust bits during pre-processing operations according to an example of the invention.

This figure provides an example of preprocessing of PUF. The preprocessing operations allows to reject pairs for which primitive difference is below a reliable threshold.

Preferably, the preprocessing operation consists in adding intentionally mismatches between primitives.

In other words, an intentional disturbance is injected in the input of the primitives in order to evaluate the stability of the response of the primitives with respect to natural fluctuations. Only pairs having a stable response will be qualified for the final response of the PUF.

For example *puf_margin_check* input is used to unbalance INP and INN electrical characteristics (i.e. mismatches between primitives). *puf_margin_check* behaves as a digital to analog converter function that converts binary word into electrical mismatches between INP and INN primitives. Then the amount of mismatch is controlled thanks to the *puf_margin_check* parameter.

In the preprocessing process, *puf_margin_sign* is used to qualify either bit at '0' when *puf_margin_sign* value is '0' either a bit at '1' when *puf_margin_sign* is '1'.

For the pairs of the subset 20, the checking is carried out for both bit=0 and bit=1.

As difference of primitive values follows a normal law, for a given value of *puf_margin_check,* it is possible to calculate the average proportion of bit marked as robust.

Assuming that "*Iref*" is the average of primitive values, that "$\sigma$" is the variance of primitive difference and "$\mu$" is the primitive difference between INP and INN, the percentage of qualified pairs can be estimated using the following formula:

$$\%puf\_marked\_as\_robust = 100 * 2 * \int_{-\infty}^{-lref *puf\_margin\_check} \frac{1}{\sigma\sqrt{2\pi}} e^{-\frac{1}{2}(\frac{x-\mu}{\sigma})} dx$$

Where "dx" stand for the integral annotation to select value "x" to be integrated.

According to the example of Figure 3, a value of electrical mismatch is chosen and set to the puf_margin_check field. For instance, the value can be 20%. Assuming that the subset 20 contains N+1 pairs of primitives, a loop of N+1 occurrences is performed twice for taking into account the fact that mismatch may be applied either in positive manner or negative manner between the two primitives. For each iteration of the loop, if the results provided when applying the variation either by addition or by subtraction (i.e. +20% and -20%) is the same then the corresponding pair is considered as providing a robust (stable) bit. Thus if the results are equal, the pair is qualified, else it is marked as not robust in the vector 40.

This qualification method is run once, preferably before the issuance of the device. For example the qualification method may be executed during the personalization phase of the device.

When running the PUF after the issuance of the device, responses generated by the pairs marked as "not robust" will be discarded. Only the bits generated by the pairs marked as qualified in the vector 40 will be used to constitute the final response of the PUF. In such an embodiment, a response if generated for all pairs of the subset 20 and the response of the pairs not qualified are discarded in a second time.

Alternatively, a response if generated for all qualified pairs only.

The PUF response generated according to the invention can be used for tracking genuine device or as seed for cryptographic applications for example.

Thanks to the invention, the workload corresponding to the selection of the robust (i.e. reliable) bits is performed once and during an early phase of the device life. Thus when running a PUF, the post processing operations are dramatically reduced and time is saved each time the PUF must be executed. In addition, power consumption is decreased when getting the PUF response.

Since the percentage of qualified pairs can be estimated according to the reference threshold, it makes possible to finely adjust the size of the subset of pairs.

The invention allows to discard pairs whose result may vary with external conditions and aging.

Since the pairs are selected using a comparison done between two identical primitives, the invention remains independent of the power applied to the device. In other words, the list of qualified pairs does not depend on the level of voltage or current applied to the device.

An advantage of the invention is to be independent of the underlying technology used for the design of the device. It may apply to a wide range of devices.

The invention is not restricted to chip. It may apply to any device comprising a plurality of electronic basic elements which may be coupled by pairs. For example it applies to SOC systems or system comprising several chips.

It must be understood, within the scope of the invention, that the above-described embodiments are provided as non-limitative examples. The invention is not limited to the described embodiments or examples. In particular, the features described in the presented embodiments and examples may be combined.

## Claims

1. A method of generating and selecting primitives for implementing a physical unclonable function providing a response representative of a device (10), said device comprising a plurality of primitives coupled in pairs (PI, ..., P6), **characterized in that** said method comprises the following steps:

   - selecting a subset (20) of the pairs,
   - assessing difference between electrical characteristics values provided by primitives belonging to each pair of said subset (20), and
   - qualifying all pairs of primitives for which the assessed difference is higher than a reference threshold.

2. The method according to claim 1, wherein the assessing step is performed by injecting an electrical mismatch between primitives of each pair.

3. The method according to claim 1, wherein the method comprises a further step of permanently storing a vector (40) identifying the qualified pairs.

**4.** The method according to claim 1, wherein the reference threshold is adjusted in function of a targeted ratio of qualified pairs to all pairs of the subset (20).

**5.** A method for executing a physical unclonable function,
**characterized in that** said method comprises the following steps:

   - retrieving the pairs qualified according to the method of claim 1,
   - generating a physical unclonable function response only from primitives belonging to all qualified pairs.

**6.** A device (10) comprising a plurality of primitives coupled in pairs (P1, ..., P6),
**characterized in that** a subset (20) of the pairs is selected, **in that** the device comprises a selector (30) configured to assess difference between electrical characteristics values provided by primitives belonging to each pair of the subset (20), and **in that** the selector is configured to qualify all pairs of primitives for which the assessed difference is higher than a reference threshold, said qualified pairs corresponding to primitives selected for implementing a physical unclonable function providing a response representative of the device.

**7.** The device according to claim 6, wherein the selector is configured to inject an electrical mismatch between primitives of each pair of the subset (20) when assessing difference between electrical characteristics values.

**8.** The device according to claim 6, wherein the selector is configured to permanently store a vector (40) identifying the qualified pairs.

**9.** The device according to claim 6, wherein the device comprises a generator (50) adapted to run the physical unclonable function, the generator being configured to generate the response from only the qualified pairs.

**10.** The device according to claim 6, wherein the device is a chip or a system-on-a-chip.

**11.** The device according to claim 6, wherein the device is a printed circuit board and primitives are electronic components.

# FIG. 1

# FIG. 2

```
┌────────────────────────────┐        ┌────────────────────────────┐
│ Set puf_margin_check='X'   │        │ Set puf_margin_check='X'   │
│ Set puf_margin_sign='0'    │        │ Set puf_margin_sign='1'    │
└────────────────────────────┘        └────────────────────────────┘
              │                                      │
              ▼                                      ▼
┌────────────────────────────┐        ┌────────────────────────────┐
│      For i=0 to N          │        │      For i=0 to N          │
│   Measure puf_out<i>       │        │   Measure puf_out<i>       │
└────────────────────────────┘        └────────────────────────────┘
              │                                      │
              ▼                                      ▼
┌────────────────────────────┐        ┌────────────────────────────┐
│  Save Measure puf_out<i>   │        │  Save Measure puf_out<i>   │
│    (out_margin0<i>)        │        │    (out_margin1<i>)        │
└────────────────────────────┘        └────────────────────────────┘
              │                                      │
              └──────────────┐        ┌─────────────┘
                             ▼        ▼
                    ┌────────────────────┐
                    │      Compare       │
                    │  out_margin0<i> and│
                    │  (out_margin1<i>)  │
                    └────────────────────┘
                             │
    out_margin0<i>=out_margin1<i> │ out_margin0<i>≠ out_margin1<i>
              │                                      │
              ▼                                      ▼
┌────────────────────────────┐        ┌────────────────────────────┐
│          Store             │        │          Store             │
│     Bit <i> is robust      │        │   Bit <i> is not robust    │
└────────────────────────────┘        └────────────────────────────┘
```

# FIG. 3

FIG. 4

Europäisches
Patentamt

European
Patent Office

Office européen
des brevets

# EUROPEAN SEARCH REPORT

Application Number

EP 17 30 6458

## DOCUMENTS CONSIDERED TO BE RELEVANT

| Category | Citation of document with indication, where appropriate, of relevant passages | Relevant to claim | CLASSIFICATION OF THE APPLICATION (IPC) |
|---|---|---|---|
| X | US 8 415 969 B1 (FICKE JOEL T [US] ET AL) 9 April 2013 (2013-04-09) * abstract * * column 2, lines 16-52 * ----- | 1-11 | INV. H04L9/32 |
| X | US 9 485 094 B1 (PARVARANDEH PIROOZ [US] ET AL) 1 November 2016 (2016-11-01) * abstract * * column 2, lines 8-33 * * column 4, line 36 - column 5, line 62 * ----- | 1-11 | |
| A | US 2016/373264 A1 (KATOH YOSHIKAZU [JP]) 22 December 2016 (2016-12-22) * paragraphs [0001] - [0019] * ----- | 1-11 | |

|  |
|---|
| TECHNICAL FIELDS SEARCHED (IPC) |
| H04L |

The present search report has been drawn up for all claims

| Place of search | Date of completion of the search | Examiner |
|---|---|---|
| Munich | 7 February 2018 | Di Felice, M |

CATEGORY OF CITED DOCUMENTS

X : particularly relevant if taken alone
Y : particularly relevant if combined with another document of the same category
A : technological background
O : non-written disclosure
P : intermediate document

T : theory or principle underlying the invention
E : earlier patent document, but published on, or after the filing date
D : document cited in the application
L : document cited for other reasons

.................................................................................................
& : member of the same patent family, corresponding document

EPO FORM 1503 03.82 (P04C01)

## ANNEX TO THE EUROPEAN SEARCH REPORT
## ON EUROPEAN PATENT APPLICATION NO.

EP 17 30 6458

This annex lists the patent family members relating to the patent documents cited in the above-mentioned European search report.
The members are as contained in the European Patent Office EDP file on
The European Patent Office is in no way liable for these particulars which are merely given for the purpose of information.

07-02-2018

| Patent document cited in search report | | Publication date | Patent family member(s) | | Publication date |
|---|---|---|---|---|---|
| US 8415969 | B1 | 09-04-2013 | NONE | | |
| US 9485094 | B1 | 01-11-2016 | NONE | | |
| US 2016373264 | A1 | 22-12-2016 | CN | 106257590 A | 28-12-2016 |
| | | | JP | 2017011678 A | 12-01-2017 |
| | | | US | 2016373264 A1 | 22-12-2016 |

EPO FORM P0459

For more details about this annex : see Official Journal of the European Patent Office, No. 12/82